# EUROPEAN PATENT SPECIFICATION

(11) **EP 4 008 976 B1**
(45) Date of publication and mention of the grant of the patent: **21.10.2026**
(21) Application number: 21212061.2
(22) Date of filing: 02.12.2021
(51) Int. Cl.: F24F 11/46, F24F 11/64, F24F 11/88, H02J 3/01, H02P 13/06, H02P 7/20, H02P 7/282, H02P 5/46, H02P 23/14

(54) **OUTPUT INDUCTANCE VALUE CONTROLLING METHOD, APPARATUS, AND COMPUTER DEVICE OF MULTI-TAP REACTOR**
VERFAHREN ZUR STEUERUNG DES AUSGANGSINDUKTIVITÄTSWERTS, VORRICHTUNG UND RECHNERVORRICHTUNG FÜR EINEN REAKTOR MIT MEHREREN ANSCHLÜSSEN
PROCÉDÉ, APPAREIL ET DISPOSITIF INFORMATIQUE DE RÉGLAGE DE LA VALEUR DE L'INDUCTANCE DE SORTIE D'UN RÉACTEUR À PRISES MULTIPLES

(30) Priority: 02.12.2020 CN 202011405861
(43) Date of publication of application: 08.06.2022
(73) Proprietor: Guangdong Giwee Technology Co., Ltd., Foshan City Guangdong (CN)
(72) Inventor: WU, Shixian, Lishui Town, Nanhai District, Foshan City, Guangdong Provice (CN); YULIN, Li, Lishui Town, Nanhai District, Foshan City, Guangdong Provice (CN)
(74) Representative: Dehns

(56) References cited:
- CN-A- 106 438 317
- FR-A5- 2 154 033
- JP-A- 2012 120 291
- JP-A- 2013 138 580

## Description

### Technical field

The present invention relates to the field of air conditioner technologies, and in particular to an output inductance value controlling method, apparatus, and computer device for a multi-tap reactor.

### Background

During operation of an air conditioner, an alternating current (AC) input current will produce severe waveform distortion, and inject a large number of higher harmonics into a power grid. In order to reduce current harmonic components and improve a power factor, existing manufacturers will provide a reactor connected in series to an AC input end of each air conditioner. When a set of air conditioner includes multiple internal units, each internal unit needs to be provided with an additional reactor, which will cause an extremely high production cost of the air conditioner. Moreover, a single reactor has a fixed inductance value which cannot be adjusted accordingly, thus having a low applicability.
CN 106438317 A discloses a control circuit for an air conditioner compressor. The air conditioner compressor control circuit comprises a compressor drive module connected to a compressor via filter module comprising a reactor. A control module is connected to the compressor drive module and controls the compressor drive based on feedback from at least one of the temperature detection module, a current collection module, and a voltage detection module.

### Summary of the Invention

A main objective of the preferred embodiments of the present invention is to provide an output inductance value controlling method, apparatus, and computer device for a multi-tap reactor, aiming to solve the disadvantages of the existing air conditioner with multiple internal units including high production cost and low applicability of internal reactors.

Viewed from a first aspect, the present invention provides an output inductance value controlling method for a multi-tap reactor, wherein a single output port of the multi-tap reactor is correspondingly connected to a single relay, and each relay is connected to a general power supply of all air conditioner internal units. The controlling method is characterised in that it includes:
acquiring a motor speed and a phase current of each of the air conditioner internal units separately;
calculating a sum of motor powers of all the air conditioner internal units according to the motor speeds and the phase currents;
determining a basic inductance value required by the air conditioner internal units according to the sum of motor powers; and
setting an output inductance value of the multi-tap reactor according to the basic inductance value, and inputting the output inductance value into the general power supply of the air conditioner internal units.

Optionally, the step of calculating a sum of motor powers of all the air conditioner internal units according to the motor speeds and the phase currents includes:
substituting the motor speed and phase current of the air conditioner internal unit into a preset formula, and calculating a motor power of the air conditioner internal unit, wherein the preset formula is: P=3Ke x I x N/9.5493, P is the motor power, Ke is a back electromotive force constant, I is the phase current, and N is the motor speed; and
adding the motor powers corresponding to the air conditioner internal units, and calculating the sum of motor powers.

Optionally, the step of determining a basic inductance value required by the air conditioner internal units according to the sum of motor powers includes:
retrieving a power and inductance value mapping relationship table, the power and inductance value mapping relationship table including multiple groups of power and inductance value, and a single power corresponding to a single inductance value; and
filtering out the inductance value corresponding to the sum of motor powers from the power and inductance value mapping relationship table.

Optionally, the step of setting an output inductance value of the multi-tap reactor according to the basic inductance value, and inputting the output inductance value into the general power supply of the air conditioner internal units includes:
selecting a corresponding first output port on the multi-tap reactor according to the basic inductance value; and
controlling a first relay connected to the first output port to be closed, so that the first output port is connected to the general power supply of the air conditioner internal unit, and inputting the output inductance value to the general power supply of the air conditioner internal unit.

Optionally, the step of acquiring a motor speed and a phase current of each of the air conditioner internal units separately includes:
establishing communication with a direct current (DC) motor drive module board of the air conditioner internal unit, the DC motor drive module board being configured to control a working state of a DC motor of the air conditioner internal unit; and
obtaining the motor speed and phase current of the air conditioner internal unit through a communication protocol corresponding to the establishment of communication with the DC motor drive module board.

Preferably, the communication protocol includes motor speed data and phase current data of the DC motor, and the communication protocol stipulates that the DC motor drive module board sends the motor speed data and the phase current data according to a preset frequency.

Viewed from a second aspect, the present invention provides an output inductance value controlling apparatus for a multi-tap reactor, wherein a single output port of the multi-tap reactor is correspondingly connected to a single relay, and each relay is connected to a general power supply of all air conditioner internal units. The controlling apparatus is characterised in that it includes:
an acquisition module configured to acquire a motor speed and a phase current of each of the air conditioner internal units separately;
a calculation module configured to calculate a sum of motor powers of all the air conditioner internal units according to the motor speeds and the phase currents;
a matching module configured to determine a basic inductance value required by the air conditioner internal units according to the sum of motor powers; and
an outputting module configured to set an output inductance value of the multi-tap reactor according to the basic inductance value, and input the output inductance value into the general power supply of the air conditioner internal units.

Optionally, the calculation module includes:
a first calculation unit configured to substitute the motor speed and phase current of the air conditioner internal unit into a preset formula, and calculate a motor power of the air conditioner internal unit, wherein the preset formula is: P=3Ke x I x N/9.5493, P is the motor power, Ke is a back electromotive force constant, I is the phase current, and N is the motor speed; and
a second calculation unit configured to add the motor powers corresponding to the air conditioner internal units, and calculate the sum of motor powers..

Optionally, the matching module includes:
a retrieval unit configured to retrieve a power and inductance value mapping relationship table, the power and inductance value mapping relationship table including multiple groups of power and inductance value, and a single power corresponding to a single inductance value; and
a filtering unit configured to filter out the inductance value corresponding to the sum of motor powers from the power and inductance value mapping relationship table.

Optionally, the outputting module includes:
a selection unit configured to select a corresponding first output port on the multi-tap reactor according to the basic inductance value; and
a control unit configured to control a first relay connected to the first output port to be closed, so that the first output port is connected to the general power supply of the air conditioner internal unit, and input the output inductance value to the general power supply of the air conditioner internal unit.

Optionally, the acquisition module includes:
a communication unit configured to establish communication with a DC motor drive module board of the air conditioner internal unit, the DC motor drive module board being configured to control a working state of a DC motor of the air conditioner internal unit; and
an acquisition unit configured to obtain the motor speed and phase current of the air conditioner internal unit through a communication protocol corresponding to the establishment of communication with the DC motor drive module board.

Preferably, the communication protocol in the acquisition unit includes motor speed data and phase current data of the DC motor, and the communication protocol stipulates that the DC motor drive module board sends the motor speed data and the phase current data according to a preset frequency.

Viewed from a third aspect, the present invention provides a computer device, including a memory and a processor, the memory stores a computer program, and the processor, when executing the computer program, implements the steps of any one of the above methods.

Viewed from a fourth aspect, the present invention provides a computer-readable storage medium having a computer program stored thereon, and the computer program, when executed by a processor, implements the steps of any one of the above methods.

An output inductance value controlling method, apparatus, and computer device for a multi-tap reactor are provided. A single output port of the multi-tap reactor is correspondingly connected to a single relay, and each relay is connected to a general power supply of all air conditioner internal units. When in use, an air conditioning system obtains a motor speed and a phase current of each air conditioner internal unit separately, and then calculates a sum of motor powers of all the air conditioner internal units according to the motor speeds and the phase currents. The system matches a basic inductance value required by the air conditioner internal units according to the sum of motor powers, sets a current output inductance value of the multi-tap reactor according to the basic inductance value, and inputs the output inductance value into the corresponding air conditioner internal units, thereby reducing harmonic components generated during operation of the corresponding air conditioner internal units. The air conditioning system dynamically adjusts the inductance value output by the multi-tap reactor according to real-time powers of all the air conditioner internal units, which can effectively reduce the harmonic components generated by the air conditioner during operation, and has high applicability. At the same time, there is no need to arrange a large number of reactors, which effectively reduces the production cost of the air conditioner.

### Brief Description of the Drawings

FIG 1 is a schematic diagram of steps of an output inductance value controlling method for a multi-tap reactor;
FIG 2 is a circuit diagram of connections between a multi-tap reactor and an air conditioner external unit as well as air conditioner internal units;
FIG 3 is a block diagram of an overall structure of an output inductance value controlling apparatus for a multi-tap reactor; and
FIG 4 is a schematic structural block diagram of a computer device.

The implementation of the objectives, functional characteristics, and advantages of the present invention will be further described with reference to the exemplary embodiments and the accompanying drawings.

### Detailed Description

In order to make the objectives, technical solutions, and advantages of the present invention clearer, the present invention will be further described in detail below with reference to the accompanying drawings and embodiments. It should be understood that the specific embodiments described here are only used to explain the present invention, and are not intended to limit the present invention.

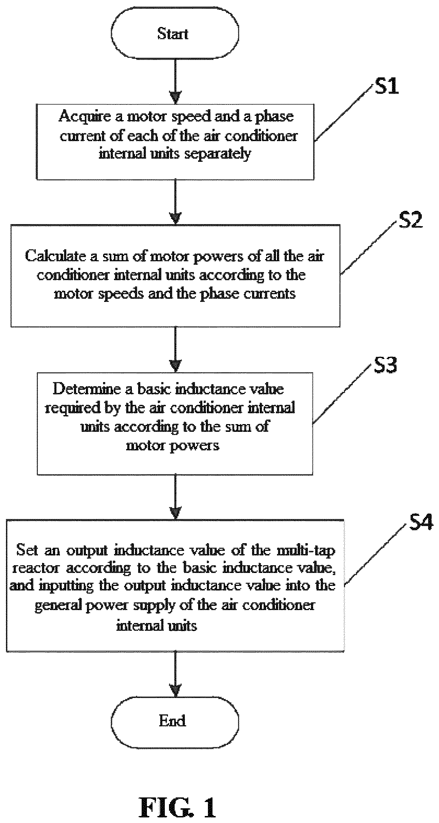

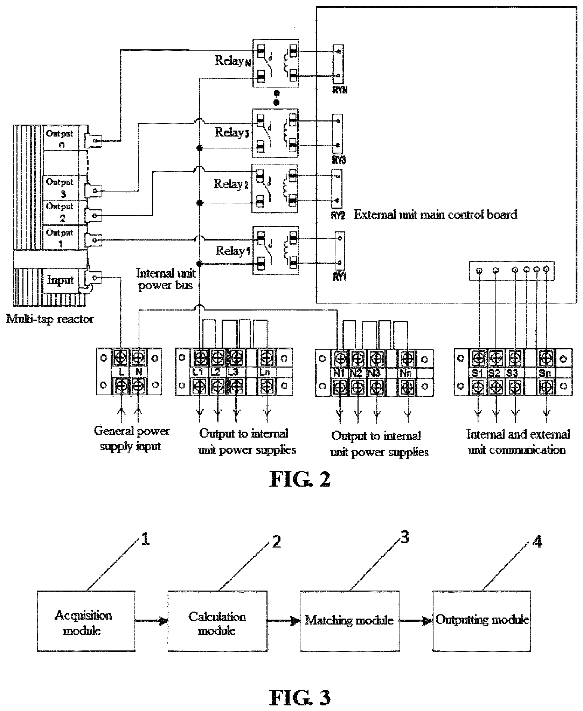

Referring to FIG 1 and FIG 2, an output basic inductance value controlling method for a multi-tap reactor is provided. A single output port of the multi-tap reactor is correspondingly connected to a single relay, and each relay is connected to a general power supply of all air conditioner internal units. The controlling method includes:
S1: acquiring a motor speed and a phase current of each of the air conditioner internal units separately;
S2: calculating a sum of motor powers of all the air conditioner internal units according to the motor speeds and the phase currents;
S3: determining a basic inductance value required by the air conditioner internal units according to the sum of motor powers; and
S4: setting an output inductance value of the multi-tap reactor according to the basic inductance value, and inputting the output inductance value into the general power supply of the air conditioner internal units.

In this embodiment, the air conditioner as a whole is composed of an air conditioner external unit connected to multiple air conditioner internal units, and a multi-tap reactor is installed on the air conditioner external unit. The multi-tap reactor has multiple output ports, a single output port is connected to a single relay, and each relay is connected to a common end of the general power supply of all the air conditioner internal units. In an initial state, only an initially set relay 1 is closed, for providing standby power to the internal units, and other relays are in a disconnected state. When the air conditioner is working, the system collects a motor speed and a phase current of each air conditioner internal unit in real time through internal and external unit communication established between an external unit electric control board and an internal unit main control board. The system calculates a real-time motor power of a single air conditioner internal unit based on the motor speed and phase current of the single air conditioner internal unit. Then, the motor powers corresponding to various air conditioner internal units are added to calculate a sum of motor powers of all the air conditioner internal units in the air conditioner. A power and inductance value mapping relationship table is stored in an internal database of the system, and the power and inductance value mapping relationship table includes multiple groups of one-to-one corresponding power and inductance value. The corresponding relationship between power and inductance value is obtained by a designer in an actual test, which is related to the specification of the air conditioner internal unit, and is not limited here. The system filters out a basic inductance value corresponding to the currently calculated motor power from the power and inductance value mapping relationship table. The basic inductance value is a basic value of an output inductance value for the subsequent selection of the corresponding output port on the multi-tap reactor. Specifically, the output ports of the multi-tap reactor have a sequence and have different output inductance values, and there is a certain inductance value difference between each other. The inductance value difference is designed by the designer according to requirements of the air conditioner internal unit. Moreover, the output inductance values of the output ports ascend by the inductance value differences according to the sequence. According to the basic inductance value calculated above, the system selects a first output port corresponding to the basic inductance value on the multi-tap reactor (the output inductance value of the first output port is the same or similar to the basic inductance value). Then, a first relay connected to the first output port is controlled to be closed (other relays still keep a disconnected state at this time), so that the first output port is connected to the general power supply of the air conditioner internal unit. At this time, the multi-tap reactor inputs the output inductance value corresponding to the basic inductance value into the general power supply of the air conditioner internal unit through the first output port, thereby reducing the harmonic components generated by the air conditioner during operation. In this embodiment, during the operation of the air conditioner, the system dynamically adjusts the current output inductance value of the multi-tap reactor according to the motor speed and phase current corresponding to each air conditioner internal unit, thereby ensuring that the output inductance value can minimize the harmonic components generated by the air conditioner during operation, avoid serious harmonic pollution and interference to the power grid and other electrical devices, and improve the power factor and the utilization efficiency of electric energy. At the same time, the air conditioner does not need to be provided with multiple reactors, which can effectively reduce the production cost, simplify the structural design of the air conditioner, and facilitate installation.

Further, the step of calculating a sum of motor powers of all the air conditioner internal units according to the motor speeds and the phase currents includes:
S201: substituting the motor speed and phase current of the air conditioner internal unit into a preset formula, and calculating a motor power of the air conditioner internal unit, wherein the preset formula is: P = 3Ke x I x N / 9.5493, where P is the motor power, Ke is a back electromotive force constant, I is the phase current, and N is the motor speed; and
S202: adding the motor powers corresponding to the air conditioner internal units, and calculating the sum of motor powers.

In this embodiment, the system retrieves a pre-entered preset formula, and then substitutes the motor speed and phase current of a single air conditioner internal unit into the preset formula, thereby calculating a motor power of the air conditioner internal unit. The preset formula is: P = 3Ke x I x N / 9.5493, wherein P is the motor power, Ke is the back electromotive force constant (a specific value thereof may be obtained from GB/T 30549-2014), I is the phase current, and N is the motor speed. According to the above preset formula, the system calculates the motor powers of the air conditioner internal units in parallel. Then, the system adds the motor powers of the air conditioner internal units to obtain the sum of current motor powers of all the air conditioner internal units. In this embodiment, it only needs to acquire the motor speed and phase current of the air conditioner internal unit, and the corresponding motor power can be calculated according to the preset formula, which is convenient and quick.

Further, the step of determining a basic inductance value required by the air conditioner internal units according to the sum of motor powers includes:
S301: retrieving a power and inductance value mapping relationship table, the power and inductance value mapping relationship table including multiple groups of power and inductance value, and a single power corresponding to a single inductance value; and
S302: filtering out the basic inductance value corresponding to the sum of motor powers from the power and inductance value mapping relationship table.

In this embodiment, a power and inductance value mapping relationship table is stored in an internal database of the system. The power and inductance value mapping relationship table includes multiple groups of power and inductance value, and a single power corresponds to an inductance value. The corresponding relationship between power and inductance value is obtained by the designer in actual tests. For example, the designer turns on a motor air conditioner of the air conditioner internal unit to 50 W, and a required inductance value is 5 mH after the test. In the power and inductance value mapping relationship table, 50 W corresponds to 5 mH. In a practical application, the corresponding relationship between power and inductance value is related to the specification of the air conditioner internal unit, and is not specifically limited here. The system compares the calculated sum of motor powers with the power and inductance value mapping relationship table, and filters out the inductance value corresponding to the current sum of motor powers, which is the basic inductance value.

Further, the step of setting an output inductance value of the multi-tap reactor according to the basic inductance value, and inputting the output inductance value into the general power supply of the air conditioner internal units includes:
S401: selecting a corresponding first output port on the multi-tap reactor according to the basic inductance value; and
S402: controlling a first relay connected to the first output port to be closed, so that the first output port is connected to the general power supply of the air conditioner internal unit, and inputting the output inductance value to the general power supply of the air conditioner internal unit.

In this embodiment, each output port on the multi-tap reactor has a different output inductance value, each output port has a corresponding serial number, and a port serial number and output inductance value mapping relationship table is stored in the system. The port serial number and output inductance value mapping relationship table includes multiple groups of port serial number and output inductance value, and a single port serial number corresponds to a single output inductance value. In the initial state (that is, when the air conditioner has just started, the output inductance value required by the multi-tap reactor has not been calculated), only an initially set relay is closed to provide standby power for each internal unit, and other relays are all in a disconnected state. After the corresponding basic inductance value is determined according to the sum of motor powers of all the air conditioner internal units, the system selects a port serial number that is the same or similar to the basic inductance value from the port serial number and output inductance value mapping table, and an output port corresponding to the port serial number is the first output port. When the output inductance values of the output ports of the multi-tap reactor are all different from the basic inductance value, the system selects an output port corresponding to the output inductance value that is closest to the basic inductance value and is greater than the basic inductance value. For example, the basic inductance value is 6 mH, as the closest to the basic inductance value, the output inductance value of an output port A is 5 mH, and the output inductance value of an output port B is 7 mH, then the system selects the output port B as the current first output port. The system controls the first relay connected to the first output port to be closed, so that the first output port is connected to the general power supply of the air conditioner internal units. The multi-tap reactor inputs the output inductance value into the general power supply of the air conditioner internal unit through the first output port, thus reducing the harmonic components generated by the air conditioner during operation.

Preferably, in the process of dynamically adjusting the output inductance value of the multi-tap reactor according to real-time powers of all the air conditioner internal units, the multi-tap reactor always keeps at least one relay connected, that is, a corresponding relay of the next output port is closed first before disconnecting the currently closed relay, thus ensuring that power is always provided for the internal units.

Further, the step of acquiring a motor speed and a phase current of each of the air conditioner internal units separately includes:
S101: establishing communication with a DC motor drive module board of the air conditioner internal unit, the DC motor drive module board being configured to control a working state of a DC motor of the air conditioner internal unit; and
S102: obtaining the motor speed and phase current of the air conditioner internal unit through a communication protocol corresponding to the establishment of communication with the DC motor drive module board.

Preferably, the communication protocol includes motor speed data and phase current data of the DC motor, and the communication protocol stipulates that the DC motor drive module board sends the motor speed data and the phase current data according to a preset frequency.

In this embodiment, the air conditioner includes an external unit electric control board, an internal unit main control board, and a DC motor drive module board. The external unit electric control board is arranged on the air conditioner external unit and is configured to control a working state of the air conditioner external unit. The internal unit main control board and the DC motor drive module board are arranged in the air conditioner internal unit. The internal unit main control board is configured to control a working state of the air conditioner internal unit, and the DC motor drive module board is configured to control a working state of the DC motor of the air conditioner internal unit. Internal and external unit communication is established between the external unit electric control board and the internal unit main control board, and the external unit electric control board can acquire operating parameters of the air conditioner internal unit through the internal and external unit communication. The internal unit main control board also establishes communication with the DC motor drive module board, so that the motor speed and phase current of the air conditioner internal unit can be obtained through a communication protocol corresponding to the establishment of communication with the DC motor drive module board. The external unit electric control board obtains the motor speed and phase current of the air conditioner internal unit from the internal unit main control board through an internal and external unit communication protocol, so that the air conditioning system can calculate a motor power of the air conditioner internal unit according to the motor speed and phase current. The communication protocol between the internal unit main control board and the DC motor drive module board, and the internal and external unit communication protocol between the external unit electric control board and the internal unit main control board both include the motor speed data and phase current data of the DC motor. Moreover, the motor speed data and phase current data are sent according to a preset frequency, for example, one frame of data is sent to the external unit electric control board every second.

An output basic inductance value controlling method for a multi-tap reactor is provided in this embodiment. A single output port of the multi-tap reactor is correspondingly connected to a single relay, and each relay is connected to a general power supply of all air conditioner internal units. When in use, an air conditioning system acquires a motor speed and a phase current of each air conditioner internal unit separately, and then calculates a sum of motor powers of all the air conditioner internal units according to the motor speeds and the phase currents. The system matches a basic inductance value required by the air conditioner internal units according to the sum of motor powers, sets a current output inductance value of the multi-tap reactor according to the basic inductance value, and inputs the output inductance value into the corresponding air conditioner internal units, thereby reducing harmonic components generated during operation of the corresponding air conditioner internal units. The air conditioning system dynamically adjusts the inductance value output by the multi-tap reactor according to real-time powers of all the air conditioner internal units, which can effectively reduce harmonic components generated by the air conditioner during operation, and has high applicability. At the same time, there is no need to arrange a large number of reactors, which effectively reduces the production cost of the air conditioner.

Referring to FIG 3, an output inductance value controlling apparatus for a multi-tap reactor is further provided. A single output port of the multi-tap reactor is correspondingly connected to a single relay, and each relay is connected to a general power supply of all air conditioner internal units. The controlling apparatus includes:
an acquisition module 1 configured to acquire a motor speed and a phase current of each of the air conditioner internal units separately;
a calculation module 2 configured to calculate a sum of motor powers of all the air conditioner internal units according to the motor speeds and the phase currents;
a matching module 3 configured to determine a basic inductance value required by the air conditioner internal units according to the sum of motor powers; and
an outputting module 4 configured to set an output inductance value of the multi-tap reactor according to the basic inductance value, and input the output inductance value into the general power supply of the air conditioner internal units.

Further, the calculation module 2 includes:
a first calculation unit configured to substitute the motor speed and phase current of the air conditioner internal unit into a preset formula, and calculate a motor power of the air conditioner internal unit, wherein the preset formula is: P=3Ke x I x N/9.5493, P is the motor power, Ke is a back electromotive force constant, I is the phase current, and N is the motor speed; and
a second calculation unit configured to add the motor powers corresponding to the air conditioner internal units, and calculate the sum of motor powers.

Further, the matching module 3 includes:
a retrieval unit configured to retrieve a power and inductance value mapping relationship table, the power and inductance value mapping relationship table including multiple groups of power and inductance value, and a single power corresponding to a single inductance value; and
a filtering unit configured to filter out the inductance value corresponding to the sum of motor powers from the power and inductance value mapping relationship table.

Further, the outputting module 4 includes:
a selection unit configured to select a corresponding first output port on the multi-tap reactor according to the basic inductance value; and
a control unit configured to control a first relay connected to the first output port to be closed, so that the first output port is connected to the general power supply of the air conditioner internal unit, and input the output inductance value to the general power supply of the air conditioner internal unit.

Further, the acquisition module 1 includes:
a communication unit configured to establish communication with a DC motor drive module board of the air conditioner internal unit, the DC motor drive module board being configured to control a working state of a DC motor of the air conditioner internal unit; and
an acquisition unit configured to obtain the motor speed and phase current of the air conditioner internal unit through a communication protocol corresponding to the establishment of communication with the DC motor drive module board.

Preferably, the communication protocol in the acquisition unit includes motor speed data and phase current data of the DC motor, and the communication protocol stipulates that the DC motor drive module board sends the motor speed data and the phase current data according to a preset frequency.

In this embodiment, the modules and units of the controlling apparatus are configured to perform the steps in the above output inductance value controlling method for a multi-tap reactor, and the specific implementation process will not be described in detail here.

An output basic inductance value controlling apparatus for a multi-tap reactor is provided in this embodiment. A single output port of the multi-tap reactor is correspondingly connected to a single relay, and each relay is connected to a general power supply of all air conditioner internal units. When in use, an air conditioning system obtains a motor speed and a phase current of each air conditioner internal unit separately, and then calculates a sum of motor powers of all the air conditioner internal units according to the motor speeds and the phase currents. The system matches a basic inductance value required by the air conditioner internal units according to the sum of motor powers, sets a current output inductance value of the multi-tap reactor according to the basic inductance value, and inputs the output inductance value into the corresponding air conditioner internal units, thereby reducing harmonic components generated during operation of the corresponding air conditioner internal units. The air conditioning system dynamically adjusts the inductance value output by the multi-tap reactor according to real-time powers of all the air conditioner internal units, which can effectively reduce harmonic components generated by the air conditioner during operation, and has high applicability. At the same time, there is no need to arrange a large number of reactors, which effectively reduces the production cost of the air conditioner.

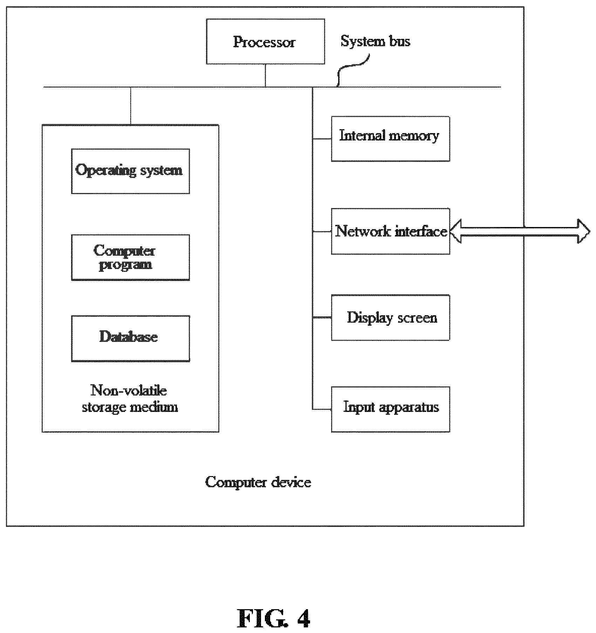

Referring to FIG 4, a computer device is further provided. The computer device may be a server, and its internal structure may be as shown in FIG 3. The computer device includes a processor, a memory, a network interface, and a database connected through a system bus. The processor designed by the computer is configured to provide calculation and control capabilities. The memory of the computer device includes a non-volatile storage medium and an internal memory. The non-volatile storage medium stores an operating system, a computer program, and a database. The internal memory provides an environment for operations of an operating system and computer programs in the non-volatile storage medium. The database of the computer device is configured to store data such as preset formulas. The network interface of the computer device is configured to communicate with an external terminal through a network connection. The computer program, when executed by the processor, implements an output basic inductance value controlling method for a multi-tap reactor. A single output port of the multi-tap reactor is correspondingly connected to a single relay, and each relay is connected to a general power supply of all air conditioner internal units.

The above processor performs the steps of the above output basic inductance value controlling method for a multi-tap reactor, including:
S1: acquiring a motor speed and a phase current of each of the air conditioner internal units separately;
S2: calculating a sum of motor powers of all the air conditioner internal units according to the motor speeds and the phase currents;
S3: determining a basic inductance value required by the air conditioner internal units according to the sum of motor powers; and
S4: setting an output inductance value of the multi-tap reactor according to the basic inductance value, and inputting the output inductance value into the general power supply of the air conditioner internal units.

Further, the step of calculating a sum of motor powers of all the air conditioner internal units according to the motor speeds and the phase currents includes:
S201: substituting the motor speed and phase current of the air conditioner internal unit into a preset formula, and calculating a motor power of the air conditioner internal unit, wherein the preset formula is: P=3Ke x I x N/9.5493, P is the motor power, Ke is a back electromotive force constant, I is the phase current, and N is the motor speed; and
S202: adding the motor powers corresponding to the air conditioner internal units, and calculating the sum of motor powers.

Further, the step of determining a basic inductance value required by the air conditioner internal units according to the sum of motor powers includes:
S301: retrieving a power and inductance value mapping relationship table, the power and inductance value mapping relationship table including multiple groups of power and inductance value, and a single power corresponding to a single inductance value; and
S302: filtering out the basic inductance value corresponding to the sum of motor powers from the power and inductance value mapping relationship table.

Further, the step of setting an output inductance value of the multi-tap reactor according to the basic inductance value, and inputting the output inductance value into the general power supply of the air conditioner internal units includes:
S401: selecting a corresponding first output port on the multi-tap reactor according to the basic inductance value; and
S402: controlling a first relay connected to the first output port to be closed, so that the first output port is connected to the general power supply of the air conditioner internal unit, and inputting the output inductance value to the general power supply of the air conditioner internal unit.

Further, the step of acquiring a motor speed and a phase current of each of the air conditioner internal units separately includes:
S101: establishing communication with a DC motor drive module board of the air conditioner internal unit, the DC motor drive module board being configured to control a working state of a DC motor of the air conditioner internal unit; and
S102: obtaining the motor speed and phase current of the air conditioner internal unit through a communication protocol corresponding to the establishment of communication with the DC motor drive module board.

Preferably, the communication protocol includes motor speed data and phase current data of the DC motor, and the communication protocol stipulates that the DC motor drive module board sends the motor speed data and the phase current data according to a preset frequency.

A computer-readable storage medium having a computer program stored thereon is further provided. The computer program, when executed by a processor, implements an output basic inductance value controlling method for a multi-tap reactor. A single output port of the multi-tap reactor is correspondingly connected to a single relay, and each relay is connected to a general power supply of all air conditioner internal units. The output basic inductance value controlling method for a multi-tap reactor specifically includes:
S1: acquiring a motor speed and a phase current of each of the air conditioner internal units separately;
S2: calculating a sum of motor powers of all the air conditioner internal units according to the motor speeds and the phase currents;
S3: determining a basic inductance value required by the air conditioner internal units according to the sum of motor powers; and
S4: setting an output inductance value of the multi-tap reactor according to the basic inductance value, and inputting the output inductance value into the general power supply of the air conditioner internal units.

Further, the step of calculating a sum of motor powers of all the air conditioner internal units according to the motor speeds and the phase currents includes:
S201: substituting the motor speed and phase current of the air conditioner internal unit into a preset formula, and calculating a motor power of the air conditioner internal unit, wherein the preset formula is: P=3Ke x I x N/9.5493, P is the motor power, Ke is a back electromotive force constant, I is the phase current, and N is the motor speed; and
S202: adding the motor powers corresponding to the air conditioner internal units, and calculating the sum of motor powers.

Further, the step of determining a basic inductance value required by the air conditioner internal units according to the sum of motor powers includes:
S301: retrieving a power and inductance value mapping relationship table, the power and inductance value mapping relationship table including multiple groups of power and inductance value, and a single power corresponding to a single inductance value; and
S302: filtering out the basic inductance value corresponding to the sum of motor powers from the power and inductance value mapping relationship table.

Further, the step of setting an output inductance value of the multi-tap reactor according to the basic inductance value, and inputting the output inductance value into the general power supply of the air conditioner internal units includes:
S401: selecting a corresponding first output port on the multi-tap reactor according to the basic inductance value; and
S402: controlling a first relay connected to the first output port to be closed, so that the first output port is connected to the general power supply of the air conditioner internal unit, and inputting the output inductance value to the general power supply of the air conditioner internal unit.

Further, the step of acquiring a motor speed and a phase current of each of the air conditioner internal units separately includes:
S101: establishing communication with a DC motor drive module board of the air conditioner internal unit, the DC motor drive module board being configured to control a working state of a DC motor of the air conditioner internal unit; and
S102: obtaining the motor speed and phase current of the air conditioner internal unit through a communication protocol corresponding to the establishment of communication with the DC motor drive module board.

Preferably, the communication protocol includes motor speed data and phase current data of the DC motor, and the communication protocol stipulates that the DC motor drive module board sends the motor speed data and the phase current data according to a preset frequency.

A person of ordinary skill in the art can understand that all or part of the processes in the above embodiment methods can be implemented by instructing relevant hardware through a computer program. The computer program may be stored in a non-volatile computer readable storage medium, and the computer program, when executed, may include the processes of the above method embodiments. Any reference to memory, storage, database, or other media may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. As an illustration rather than a limitation, the RAM is available in many forms, such as a static RAM (SRAM), a dynamic RAM (DRAM), a synchronous DRAM (SDRAM), a double speed rate SDRAM (SSRSDRAM), an enhanced SDRAM (ESDRAM), a synchronous link (Synchlink) DRAM (SLDRAM), a memory bus (Rambus) direct RAM (RDRAM), a direct Rambus dynamic RAM (DRDRAM), a Rambus dynamic RAM (RDRAM), and the like.

It should be noted that, the terms "include," "comprise," or any other variants thereof herein are intended to cover non-exclusive inclusion, so that a process, an apparatus, an article, or a method including a series of elements not only includes those elements but also include other elements not explicitly listed, or further includes elements inherent to the process, apparatus, article, or method. If there are no more restrictions, an element defined by the statement "including a(n)..." does not exclude the existence of other identical elements in the process, apparatus, article, or method that includes the element.

The above are only the preferred embodiments of the present invention, and are not intended to limit the patent scope of the present invention, which is defined by the claims.

## Claims

1. An output inductance value controlling method for a multi-tap reactor, wherein a single output port of the multi-tap reactor is correspondingly connected to a single relay, and each relay is connected to a general power supply of all air conditioner internal units, **characterised in that** the controlling method comprises:
acquiring (S1) a motor speed and a phase current of each of the air conditioner internal units separately;
calculating (S2) a sum of motor powers of all the air conditioner internal units according to the motor speeds and the phase currents;
determining (S3) a basic inductance value required by the air conditioner internal units according to the sum of motor powers; and
setting (S4) an output inductance value of the multi-tap reactor according to the basic inductance value, and inputting the output inductance value into the general power supply of the air conditioner internal units.

2. The output inductance value controlling method for a multi-tap reactor according to claim 1, wherein the step of calculating a sum of motor powers of all the air conditioner internal units according to the motor speeds and the phase currents comprises:
substituting (S201) the motor speed and phase current of the air conditioner internal unit into a preset formula, and calculating a motor power of the air conditioner internal unit, wherein the preset formula is: $P = 3 Ke x I x N / 9.5493 ,$
wherein P is the motor power, Ke is a back electromotive force constant, I is the phase current, and N is the motor speed; and
adding (S202) the motor powers corresponding to the air conditioner internal units, and calculating the sum of motor powers.

3. The output inductance value controlling method for a multi-tap reactor according to claim 1 or 2, wherein the step of determining a basic inductance value required by the air conditioner internal units according to the sum of motor powers comprises:
retrieving (S301) a power and inductance value mapping relationship table, the power and inductance value mapping relationship table comprising multiple groups of power and inductance value, and a single power corresponding to a single inductance value; and
filtering (S302) out the inductance value corresponding to the sum of motor powers from the power and inductance value mapping relationship table.

4. The output inductance value controlling method for a multi-tap reactor according to any preceding claim, wherein the step of setting an output inductance value of the multi-tap reactor according to the basic inductance value, and inputting the output inductance value into the general power supply of the air conditioner internal units comprises:
selecting (S401) a corresponding first output port on the multi-tap reactor according to the basic inductance value; and
controlling (S402) a first relay connected to the first output port to be closed, so that the first output port is connected to the general power supply of the air conditioner internal unit, and inputting the output inductance value to the general power supply of the air conditioner internal unit.

5. The output inductance value controlling method for a multi-tap reactor according to any preceding claim, wherein the step of acquiring a motor speed and a phase current of each of the air conditioner internal units separately comprises:
establishing (S101) communication with a direct current (DC) motor drive module board of the air conditioner internal unit, the DC motor drive module board being configured to control a working state of a DC motor of the air conditioner internal unit; and
obtaining (S102) the motor speed and phase current of the air conditioner internal unit through a communication protocol corresponding to the establishment of communication with the DC motor drive module board.

6. The output inductance value controlling method for a multi-tap reactor according to claim 5, wherein the communication protocol comprises motor speed data and phase current data of the DC motor, and the communication protocol stipulates that the DC motor drive module board sends the motor speed data and the phase current data according to a preset frequency.

7. An output inductance value controlling apparatus for a multi-tap reactor, wherein a single output port of the multi-tap reactor is correspondingly connected to a single relay, and each relay is connected to a general power supply of all air conditioner internal units, **characterised in that** the controlling apparatus comprises:
an acquisition module (1) configured to acquire a motor speed and a phase current of each of the air conditioner internal units separately;
a calculation module (2) configured to calculate a sum of motor powers of all the air conditioner internal units according to the motor speeds and the phase currents;
a matching module (3) configured to determine a basic inductance value required by the air conditioner internal units according to the sum of motor powers; and
an outputting module (4) configured to set an output inductance value of the multi-tap reactor according to the basic inductance value, and input the output inductance value into the general power supply of the air conditioner internal units.

8. The output inductance value controlling apparatus for a multi-tap reactor according to claim 7, wherein the calculation module (2) comprises:
a first calculation unit configured to substitute the motor speed and phase current of the air conditioner internal unit into a preset formula, and calculate a motor power of the air conditioner internal unit, wherein the preset formula is: $P = 3 Ke x I x N / 9.5493 ,$
wherein P is the motor power, Ke is a back electromotive force constant, I is the phase current, and N is the motor speed; and
a second calculation unit configured to add the motor powers corresponding to the air conditioner internal units, and calculate the sum of motor powers.

9. A computer device comprising a memory and a processor, the memory storing a computer program, wherein the processor, when executing the computer program, implements the steps of the method according to any one of claims 1 to 6.

10. A computer-readable storage medium having a computer program stored thereon, wherein the computer program, when executed by a processor, implements the steps of the method according to any one of claims 1 to 6.

## Patentansprüche

1. Ausgangsinduktivitätswert-Steuerverfahren für eine Mehrfachabgriff-Drossel, wobei ein einzelner Ausgangsanschluss der Mehrfachabgriff-Drossel entsprechend mit einem einzelnen Relais verbunden ist und jedes Relais mit einer allgemeinen Stromversorgung sämtlicher Klimaanlagen-Inneneinheiten verbunden ist, **dadurch gekennzeichnet, dass** das Steuerverfahren umfasst:
separates Erfassen (S1) einer Motordrehzahl und eines Phasenstroms jeder der Klimaanlagen-Inneneinheiten;
Berechnen (S2) einer Summe von Motorleistungen sämtlicher der Klimaanlagen-Inneneinheiten gemäß den Motordrehzahlen und den Phasenströmen;
Bestimmen (S3) eines durch die Klimaanlagen-Inneneinheiten benötigten Basisinduktivitätswerts gemäß der Summe von Motorleistungen; und
Einstellen (S4) eines Ausgangsinduktivitätswerts der Mehrfachabgriff-Drossel gemäß dem Basisinduktivitätswert, und Eingeben des Ausgangsinduktivitätswerts in die allgemeine Stromversorgung der Klimaanlagen-Inneneinheiten.

2. Ausgangsinduktivitätswert-Steuerverfahren für eine Mehrfachabgriff-Drossel nach Anspruch 1, wobei der Schritt des Berechnens einer Summe von Motorleistungen sämtlicher der Klimaanlagen-Inneneinheiten gemäß den Motordrehzahlen und den Phasenströmen umfasst:
Einsetzen (S201) der Motordrehzahl und des Phasenstroms der Klimaanlagen-Inneneinheit in eine voreingestellte Formel, und Berechnen einer Motorleistung der Klimaanlagen-Inneneinheit, wobei die voreingestellte Formel lautet: $P = 3 Ke x I x N / 9 , 5493 ,$
wobei P die Motorleistung ist, Ke eine Konstante gegenelektromotorischer Kraft ist, I der Phasenstrom ist und N die Motordrehzahl ist; und
Addieren (S202) der den Klimaanlagen-Inneneinheiten entsprechenden Motorleistungen, und Berechnen der Summe von Motorleistungen.

3. Ausgangsinduktivitätswert-Steuerverfahren für eine Mehrfachabgriff-Drossel nach Anspruch 1 oder 2, wobei der Schritt des Bestimmens eines durch die Klimaanlagen-Inneneinheiten benötigten Basisinduktivitätswerts gemäß der Summe von Motorleistungen umfasst:
Abrufen (S301) einer Leistung-und-Induktivitätswert-Zuordnungsbeziehungstabelle, wobei die Leistung-und-Induktivitätswert-Zuordnungsbeziehungstabelle mehrere Gruppen von Leistung und Induktivitätswert umfasst und eine einzelne Leistung einem einzelnen Induktivitätswert entspricht; und
Herausfiltern (S302) des der Summe von Motorleistungen entsprechenden Induktivitätswerts aus der Leistung-und-Induktivitätswert-Zuordnungsbeziehungstabelle.

4. Ausgangsinduktivitätswert-Steuerverfahren für eine Mehrfachabgriff-Drossel nach einem der vorhergehenden Ansprüche, wobei der Schritt des Einstellens eines Ausgangsinduktivitätswerts der Mehrfachabgriff-Drossel gemäß dem Basisinduktivitätswert und des Eingebens des Ausgangsinduktivitätswerts in die allgemeine Stromversorgung der Klimaanlagen-Inneneinheiten umfasst:
Auswählen (S401) eines entsprechenden ersten Ausgangsanschlusses an der Mehrfachabgriff-Drossel gemäß dem Basisinduktivitätswert; und
Steuern (S402) eines ersten Relais, das mit dem ersten zu schließenden Ausgangsanschluss verbunden ist, sodass der erste Ausgangsanschluss mit der allgemeinen Stromversorgung der Klimaanlagen-Inneneinheit verbunden wird, und Eingeben des Ausgangsinduktivitätswerts in die allgemeine Stromversorgung der Klimaanlagen-Inneneinheit.

5. Ausgangsinduktivitätswert-Steuerverfahren für eine Mehrfachabgriff-Drossel nach einem der vorhergehenden Ansprüche, wobei der Schritt des separaten Erfassens einer Motordrehzahl und eines Phasenstroms jeder der Klimaanlagen-Inneneinheiten umfasst:
Aufbauen (S101) einer Kommunikation mit einer Gleichstrom(DC)-Motorantriebsmodulplatine der Klimaanlagen-Inneneinheit, wobei die DC-Motorantriebsmodulplatine dazu konfiguriert ist, einen Arbeitszustand eines DC-Motors der Klimaanlagen-Inneneinheit zu steuern; und
Erhalten (S102) der Motordrehzahl und des Phasenstroms der Klimaanlagen-Inneneinheit durch ein Kommunikationsprotokoll, das dem Aufbau der Kommunikation mit der DC-Motorantriebsmodulplatine entspricht.

6. Ausgangsinduktivitätswert-Steuerverfahren für eine Mehrfachabgriff-Drossel nach Anspruch 5, wobei das Kommunikationsprotokoll Motordrehzahldaten und Phasenstromdaten des DC-Motors umfasst und das Kommunikationsprotokoll festlegt, dass die DC-Motorantriebsmodulplatine die Motordrehzahldaten und die Phasenstromdaten gemäß einer voreingestellten Frequenz sendet.

7. Ausgangsinduktivitätswert-Steuereinrichtung für eine Mehrfachabgriff-Drossel, wobei ein einzelner Ausgangsanschluss der Mehrfachabgriff-Drossel entsprechend mit einem einzelnen Relais verbunden ist und jedes Relais mit einer allgemeinen Stromversorgung sämtlicher Klimaanlagen-Inneneinheiten verbunden ist, **dadurch gekennzeichnet, dass** die Steuereinrichtung umfasst:
ein Erfassungsmodul (1), das dazu konfiguriert ist, eine Motordrehzahl und einen Phasenstrom jeder der Klimaanlagen-Inneneinheiten separat zu erfassen;
ein Berechnungsmodul (2), das dazu konfiguriert ist, eine Summe von Motorleistungen sämtlicher der Klimaanlagen-Inneneinheiten gemäß den Motordrehzahlen und den Phasenströmen zu berechnen;
ein Abgleichmodul (3), das dazu konfiguriert ist, einen durch die Klimaanlagen-Inneneinheiten benötigten Basisinduktivitätswert gemäß der Summe von Motorleistungen zu bestimmen; und
ein Ausgabemodul (4), das dazu konfiguriert ist, einen Ausgangsinduktivitätswert der Mehrfachabgriff-Drossel gemäß dem Basisinduktivitätswert einzustellen und den Ausgangsinduktivitätswert in die allgemeine Stromversorgung der Klimaanlagen-Inneneinheiten einzugeben.

8. Ausgangsinduktivitätswert-Steuereinrichtung für eine Mehrfachabgriff-Drossel nach Anspruch 7, wobei das Berechnungsmodul (2) umfasst:
eine erste Berechnungseinheit, die dazu konfiguriert ist, die Motordrehzahl und den Phasenstrom der Klimaanlagen-Inneneinheit in eine voreingestellte Formel einzusetzen und eine Motorleistung der Klimaanlagen-Inneneinheit zu berechnen, wobei die voreingestellte Formel lautet: $P = 3 Ke x I x N / 9 , 5493 ,$
wobei P die Motorleistung ist, Ke eine Konstante gegenelektromotorischer Kraft ist, I der Phasenstrom ist und N die Motordrehzahl ist; und
eine zweite Berechnungseinheit, die dazu konfiguriert ist, die den Klimaanlagen-Inneneinheiten entsprechenden Motorleistungen zu addieren und die Summe von Motorleistungen zu berechnen.

9. Computervorrichtung, umfassend einen Speicher und einen Prozessor, wobei der Speicher ein Computerprogramm speichert, wobei der Prozessor, wenn er das Computerprogramm ausführt, die Schritte des Verfahrens nach einem der Ansprüche 1 bis 6 implementiert.

10. Computerlesbares Speichermedium, das ein darauf gespeichertes Computerprogramm aufweist, wobei das Computerprogramm, wenn es durch einen Prozessor ausgeführt wird, die Schritte des Verfahrens nach einem der Ansprüche 1 bis 6 implementiert.

## Revendications

1. Procédé de commande de valeur d'inductance de sortie d'une réactance à prises multiples, dans lequel un seul port de sortie de la réactance à prises multiples est connecté de manière correspondante à un seul relais, et chaque relais est connecté de à une alimentation électrique générale de toutes les sections intérieures de conditionneur d'air, **caractérisé en ce que** le procédé de commande comprend :
l'acquisition (S1) séparée d'une vitesse de moteur et d'un courant de phase de chacune des sections intérieures de conditionneur d'air ;
le calcul (S2) d'une somme des puissances de moteur de toutes les sections intérieures de conditionneur d'air en fonction des vitesses de moteur et des courants de phase ;
la détermination (S3) d'une valeur d'inductance de base requise par les sections intérieures de conditionneur d'air en fonction de la somme des puissances de moteur ; et
le réglage (S4) d'une valeur d'inductance de sortie de la réactance à prises multiples en fonction de la valeur d'inductance de base, et l'entrée de la valeur d'inductance de sortie dans l'alimentation électrique générale des sections intérieures de conditionneur d'air.

2. Procédé de commande de valeur d'inductance de sortie d'une réactance à prises multiples selon la revendication 1, dans lequel l'étape consistant à calculer une somme des puissances de moteur de toutes les sections intérieures de conditionneur d'air en fonction des vitesses de moteur et des courants de phase comprend :
la substitution (S201) de la vitesse de moteur et du courant de phase de la section intérieure de conditionneur d'air dans une formule prédéfinie, et le calcul d'une puissance de moteur de la section intérieure de conditionneur d'air, dans lequel la formule prédéfinie est : $P = 3 Ke x I x N / 9 , 5493 ,$
dans lequel P est la puissance de moteur, Ke est une constante de force contre-électromotrice, I est le courant de phase, et N est la vitesse de moteur ; et
l'addition (S202) des puissances de moteur correspondant aux sections intérieures de conditionneur d'air et le calcul de la somme des puissances de moteur.

3. Procédé de commande de valeur d'inductance de sortie d'une réactance à prises multiples selon la revendication 1 ou 2, dans lequel l'étape consistant à déterminer une valeur d'inductance de base requise par les sections intérieures de conditionneur d'air en fonction de la somme des puissances de moteur comprend :
la récupération (S301) d'un tableau de relation de correspondance entre la puissance et la valeur d'inductance, le tableau de relation de correspondance entre la puissance et la valeur d'inductance comprenant plusieurs groupes de puissance et de valeur de puissance, et une seule puissance correspondant à une seule valeur d'inductance ; et
le filtrage (S302) de la valeur d'inductance correspondant à la somme des puissances de moteur à partir du tableau de relation de correspondance entre la puissance et la valeur d'inductance.

4. Procédé de commande de valeur d'inductance de sortie d'une réactance à prises multiples selon l'une quelconque revendication précédente, dans lequel l'étape consistant à régler une valeur d'inductance de sortie de la réactance à prises multiples en fonction de la valeur d'inductance de base et à entrer la valeur d'inductance de sortie dans l'alimentation électrique générale des sections intérieures de conditionneur d'air comprend :
la sélection (S401) d'un premier port de sortie correspondant sur la réactance à prises multiples en fonction de la valeur d'inductance de base ; et
la commande (S402) d'un premier relais connecté au premier port de sortie à fermer, de sorte que le premier port de sortie soit connecté à l'alimentation électrique générale de la section intérieure de conditionneur d'air, et l'entrée de la valeur d'inductance de sortie dans l'alimentation électrique générale de la section intérieure de conditionneur d'air.

5. Procédé de commande de valeur d'inductance de sortie d'une réactance à prises multiples selon l'une quelconque revendication précédente, dans lequel l'étape consistant à acquérir séparément une vitesse de moteur et un courant de phase de chacune des sections intérieures de conditionneur d'air comprend :
l'établissement (S101) d'une communication avec une carte de module d'entraînement de moteur à courant continu (CC) de la section intérieure de conditionneur d'air, la carte de module d'entraînement de moteur CC étant configurée pour commander un état de fonctionnement d'un moteur CC de la section intérieure de conditionneur d'air ; et
l'obtention (S102) de la vitesse de moteur et du courant de phase de la section intérieure de conditionneur d'air via un protocole de communication correspondant à l'établissement de la communication avec la carte de module d'entraînement de moteur CC.

6. Procédé de commande de valeur d'inductance de sortie d'une réactance à prises multiples selon la revendication 5, dans lequel le protocole de communication comprend des données de vitesse de moteur et des données de courant de phase du moteur CC, et le protocole de communication stipule que la carte de module d'entraînement de moteur CC envoie les données de vitesse de moteur et les données de courant de phase selon une fréquence prédéfinie.

7. Appareil de commande de valeur d'inductance de sortie d'une réactance à prises multiples, dans lequel un seul port de sortie de la réactance à prises multiples est connecté de manière correspondante à un seul relais, et chaque relais est connecté de à une alimentation électrique générale de toutes les sections intérieures de conditionneur d'air, **caractérisé en ce que** l'appareil de commande comprend :
un module d'acquisition (1) configuré pour acquérir séparément une vitesse de moteur et un courant de phase de chacune des sections intérieures de conditionneur d'air ;
un module de calcul (2) configuré pour calculer une somme des puissances de moteur de toutes les sections intérieures de conditionneur d'air en fonction des vitesses de moteur et des courants de phase ;
un module de correspondance (3) configuré pour déterminer une valeur d'inductance de base requise par les sections intérieures de conditionneur d'air en fonction de la somme des puissances de moteur ; et
un module de sortie (4) configuré pour régler une valeur d'inductance de sortie de la réactance à prises multiples en fonction de la valeur d'inductance de base, et pour entrer la valeur d'inductance de sortie dans l'alimentation électrique générale des sections intérieures de conditionneur d'air.

8. Appareil de commande de valeur d'inductance de sortie d'une réactance à prises multiples selon la revendication 7, dans lequel le module de calcul (2) comprend :
une première unité de calcul configurée pour substituer la vitesse de moteur et du courant de phase de la section intérieure de conditionneur d'air dans une formule prédéfinie, et pour calculer une puissance de moteur de la section intérieure de conditionneur d'air, dans lequel la formule prédéfinie est : $P = 3 Ke x I x N / 9 , 5493 ,$
dans lequel P est la puissance de moteur, Ke est une constante de force contre-électromotrice, I est le courant de phase, et N est la vitesse de moteur ; et
une seconde unité de calcul configurée pour additionner des puissances de moteur correspondant aux sections intérieures de conditionneur d'air, et pour calculer la somme des puissances de moteur.

9. Dispositif informatique comprenant une mémoire et un processeur, la mémoire stockant un programme informatique, dans lequel le processeur, lors de l'exécution du programme informatique, met en œuvre les étapes du procédé selon l'une quelconque des revendications 1 à 6.

10. Support de stockage lisible par ordinateur sur lequel est stocké un programme informatique, dans lequel le programme informatique, lorsqu'il est exécuté par un processeur, met en œuvre les étapes du procédé selon l'une quelconque des revendications 1 à 6.
